# EUROPÄISCHE PATENTANMELDUNG

(11) **EP 1 416 747 A1**
(43) Veröffentlichungstag der Anmeldung: **06.05.2004**
(21) Anmeldenummer: 03450227.8
(22) Anmeldetag: 09.10.2003
(51) Int. Cl.: H04Q 7/24, H04Q 3/00

(54) **Verfahren zur Integration von Telekommunikationsplattformen und Diensten**

(30) Priorität: 24.10.2002 AT 16152002
(71) Anmelder: Mobilkom Austria Aktiengesellschaft & Co KG, 1020 Wien (AT)
(72) Erfinder: Trenovatz, Horst, 1020 Wien (AT); Bonek, Peter, 1020 Wien (AT); Pospischil, Günther, 1020 Wien (AT)
(74) Vertreter: Hehenberger, Reinhard, Dipl.-Ing., Patentanwalt

(57) **Zusammenfassung**

Die Erfindung betrifft ein Verfahren und eine Vorrichtung zur Kombination von mehreren Diensten auf einer oder mehreren Telekommunikationsplattformen. Die Erfindung beseitigt die Einschränkungen existierender Diensteplattformen und Verbindungssteuerungsmechanismen, sodaß nunmehr mehrere Dienste gleichzeitig die Verbindungssteuerung beeinflussen können. Zu diesem Zweck wird ein Adaptermodul mit Gateway/Proxy-Mechanismus verwendet, genannt Service Interaction Gateway (SIG).

Das Service Interaction Gateway dient einerseits zum Anpassen und Weiterleiten der erforderlichen Signalisierungs-Nachrichten an die jeweiligen Diensteplattformen bzw. Dienste, andererseits zur Verwaltung und Steuerung der Interaktionen. Somit ist es möglich, mehrere den Rufaufbau beeinflussende Dienste in einer frei konfigurierbaren Reihenfolge auszuführen. Die Antworten der aufgerufenen Dienste werden im Service Interaction Gateway verknüpft, gefiltert und an das Telekommunikationsnetz weitergeleitet. Anpassungen oder direkte Kommunikation zwischen den Diensten sind dabei nicht erforderlich. Die Interaktion von jeweils einer oder mehreren Dienste auf Basis von IN, OSA, oder ähnlichen Konzepten, ist somit möglich.

## Beschreibung

Die Erfindung betrifft ein Verfahren zur Koordination bzw. Steuerung von Diensten, die in die Verbindungssteuerung von Telekommunikationsverbindungen eingebunden sind.

Die Erfindung betrifft insbesondere ein Verfahren zur Kombination von Telekommunikationsplattformen und darauf ausgeführten Diensten (in der Informationstechnologie auch Anwendungen bzw. Applikationen genannt). In Telekommunikationsnetzen (PSTN, GSM, IS-95, etc.) werden derzeit Dienste auf Plattformen für intelligente Netze (Intelligent Network, IN) eingesetzt. Im Zuge der Entwicklung der 3. Mobilfunkgeneration (IMT-2000) sowie von Internet-Telefonie (Voice-over-IP) wurde eine neue Diensteplattform (OSA/Parlay) spezifiziert. Die Kombination von Internetund Telekommunikationsdiensten steht dabei im Vordergrund. Somit ist es wünschenswert, dass mehrere Dienste auf unterschiedlichen Plattformen in die Verbindungssteuerung eingreifen können.

In die Steuerung von Telekommunikationsverbindungen kann nur an definierten Stellen, den sogenannten Unterbrechungserkennungspunkten (Trigger Detection Points), eingegriffen werden. Damit ergibt sich bei der Verbindungssteuerung das Problem, dass für jede Verbindung nur eine beschränkte Anzahl von Diensten die Steuerung beeinflussen können. Dadurch ist die Integration vorhandener IN-Dienste mit neuen OSA/Parlay-Diensten nicht einfach möglich, vor allem wenn an ein und der selben Stelle in der Verbindungssteuerung eingegriffen werden soll.

Im Stand der Technik werden in Telekommunikationssystemen zur Verbindungssteuerung verstärkt IN-Dienste eingesetzt. Zusätzlich existieren spezifische Dienste auf herstellerabhängigen Systemen, z.B. Sprachplattformen (IVR). Für komplexe Dienste bietet sich zusätzlich eine OSA/Parlay-Plattform an, die die Verknüpfung von Verbindungssteuerung, Benutzerdialogen, Positionsdaten, etc. ermöglicht. Dies erlaubt die Verbindung von Internet- und Telekommunikationsdiensten unter Verwendung einer einheitlichen Plattform. Bei der Verwendung dieser Plattform und bereits existierender IN-Plattformen kann es dabei zu Konflikten bei der Verbindungssteuerung kommen.

IN Systeme wurden in Telekommunikationsnetzen entwickelt, damit komplizierte Dienstelogiken, falls überhaupt möglich, nicht in allen Vermittlungsstellen eines Netzes implementiert werden müssen, sondern an einer zentralen Stelle implementiert und gewartet werden können. Ein IN besteht im wesentlichen aus zwei Teilen:
- Dienstvermittlungsfunktion (Service Switching Point, SSP): Ein SSP ist ein Teil einer digitalen Vermittlungsstelle mit speziellem Steuerungsprogramm und hat die Aufgabe Verbindungen, auf die bestimmte Kriterien zutreffen, zu erkennen und die Anfragen an einen Knoten (den SCP) mit entsprechender Dienstelogik weiterzuleiten (in weiterer Folge Triggernotifikationen genannt), um dort einen IN Dienst zu initiieren.
- Dienstesteuerungsfunktion (Service Control Point, SCP): Ein SCP enthält die Logik der IN Dienste. Nach Abarbeiten der entsprechenden Dienstelogik werden Verkehrslenkungsinformationen zur Steuerung der Verbindung (in weiterer Folge Steuerbefehle genannt) an den SSP weitergeleitet und von der Vermittlungsstelle ausgeführt.

Damit eine Verbindung über externe Dienste gesteuert werden kann, müssen bestimmte Ereignisse beim Auf- und Abbau und während einer Verbindung der Dienstelogik gemeldet werden können. Die Dienstelogik muss in der Lage sein bestimmte Funktionen einer Vermittlungsstelle zu steuern. Um einer externen Dienstelogik ein standardisiertes, herstellerunabhängiges Abbild der Verbindungssteuerung zu bieten, wurde ein Modell zur Verbindungssteuerung, das sogenannte Basic Call State Model (BCSM) definiert. Dieses BCSM besteht im Wesentlichen aus drei Teilen:
- Steuerpunkt (Points in Call, PIC): Ein Point in Call (PIC) beschreibt eine Funktion, die während der Verbindungssteuerung ausgeführt wird, beispielsweise die Analyse der gewählten Rufnummer. Ein PIC wird über Ereignisse am Ein- und Ausgang des PIC und die Funktion, die an diesem PIC ausgeführt wird, beschrieben.
- Erkennungspunkt (Detection Points, DP): Ein Detection Point (DP) beschreibt ein Ereignis am Ein- oder Ausgang eines PIC, zum Beispiel, dass der gerufenen Teilnehmer antwortet. Nur die durch DPs beschriebenen Ereignisse sind für externe Dienstelogik sichtbar, und daher kann die Dienstelogik nur an diesen Punkten in die Verbindungssteuerung eingreifen. Zu jedem DP werden bestimmte Auslösebedingungen (im folgenden Triggerkriterien genannt) gesetzt. Nur bei Eintreten dieser festgelegten Triggerkriterien wird das Ereignis an die eingetragene Plattform (z.B. SCP oder OSA Plattform), auf der die Dienstelogik abgearbeitet wird, gemeldet. Statisch aktivierte DPs, sogenannte Unterbrechungserkennungspunkte (Trigger Detection Points, TDP), legen den Punkt fest, an dem eine Diensteplattform benachrichtigt wird. TDPs bewirken immer eine Unterbrechung des Verbindungsaufbaus bis zum Eintreffen von Steuerbefehlen von der Diensteplattform. DPs können auch von einem Dienst dynamisch als sogenannte Ereigniserkennungspunkte (Event Detection Points, EDP) aktiviert werden, wie beispielsweise: Angerufener beendet die Verbindung. Bei den EDPs unterscheidet man zwischen Ereigniserkennungspunkt-Unterbrechung (EDP-Request, EDP-R) und Ereigniserkennungspunkt-Benachrichtigung (EDP-Notification, EDP-N). EDP-R bewirkt eine Unterbrechung des Verbindungsaufbaus bis zum Eintreffen von Steuerbefehlen von der Diensteplattform. EDP-N bewirkt nur eine Benachrichtigung der Diensteplattform über das Eintreten des Triggerkriteriums, der Verbindungsaufbau wird nicht unterbrochen.
- Übergänge (Transitions): Diese beschreiben die möglichen Wechsel zwischen den einzelnen PICs.
- Auslösebedingung (Triggerkriterium): Die Kriterien zum Ansprechen eines DPs können sich aus folgenden wesentlichen Parametern zusammernsetzen:
   o die Nummer des anrufenden Teilnehmers
   o die Nummer des gerufenen Teilnehmers
   o mögliche weitere DP spezifische Parameter

Die Definition des BCSM beruht darauf, dass sich die Verbindungssteuerung in einer Vermittlungsstelle jeweils aus einem Teil für die initiierende Seite der Verbindung (Originating BCSM, O-BCSM und einem Teil für die terminierende Seite der Verbindung (Terminating BCSM, T-BCSM), zusammensetzt.

Open Service Access (OSA) - Parlay bietet eine standardisierte Schnittstelle für den Zugriff auf unterschiedliche Funktionalitäten eines Telekommunikationsnetzes (wie z.B. Verbindungssteuerung, Positionierungs- und Benutzerdaten, etc.). Die wesentlichen Komponenten der OSA-Plattform sind:
- Framework: kontrolliert den Zugriff von Diensten auf die OSA-Schnittstelle
- Call Control: bietet Diensten die Möglichkeit in die Verbindungssteuerung einzugreifen User Interaction: erlaubt Diensten das Senden von Nachrichten an den Benutzer und Empfangen von Benutzereingaben
- Mobility: liefert Status und Positionsdaten von Benutzern an Dienste

Weitere Funktionalitäten können in das System integriert werden.

Die standardisierte Schnittstelle erlaubt es eine große Zahl von Diensten über diese Plattform zu implementieren, ohne die darunter liegenden Netzprotokolle für die Dienstentwicklung verwenden zu müssen. Beispielsweise kann in die Verbindungssteuerung eingegriffen werden, ohne das BCSM im Detail kennen zu müssen. Mit dem Parameter Monitormode wird im Triggerkriterium festgelegt, ob beim Eintreten des Kriteriums die OSA-Plattform nur benachrichtigt wird (Monitormode = notify), oder ob der Verbindungsaufbau solange unterbrochen wird (Monitormode = interrupt), bis Steuerbefehle von der OSA-Plattform für den weiteren Verbindungsaufbau geliefert werden.

Gebräuchliche IN-Dienste sind beispielsweise Virtual Private Network (VPN), Prepaid (PP) oder Number Translations (NT). Dabei konnte man davon ausgehen, dass jeweils nur ein Dienst (pro Detection Point) in die Verbindungssteuerung eingreift. Es ist bisher nicht möglich, dass mehrere Dienste/Plattformen von einem Triggerereignis informiert werden und die Steuerung der Verbindung übernehmen. Somit kann pro Detection Point nur ein Dienst aktiv werden. Dadurch ergeben sich gravierende Einschränkungen bei der Verwendung mehrerer IN-Dienste, sowie insbesondere bei der Integration einer OSA/Parlay Plattform mit vielen Diensten in ein existierendes IN-System. In diesem Fall ist es oft notwendig, dass mehrere Dienste auf einem Trigger Detection Point in die Verbindungssteuerung eingreifen und von dem Triggerereignis informiert werden.

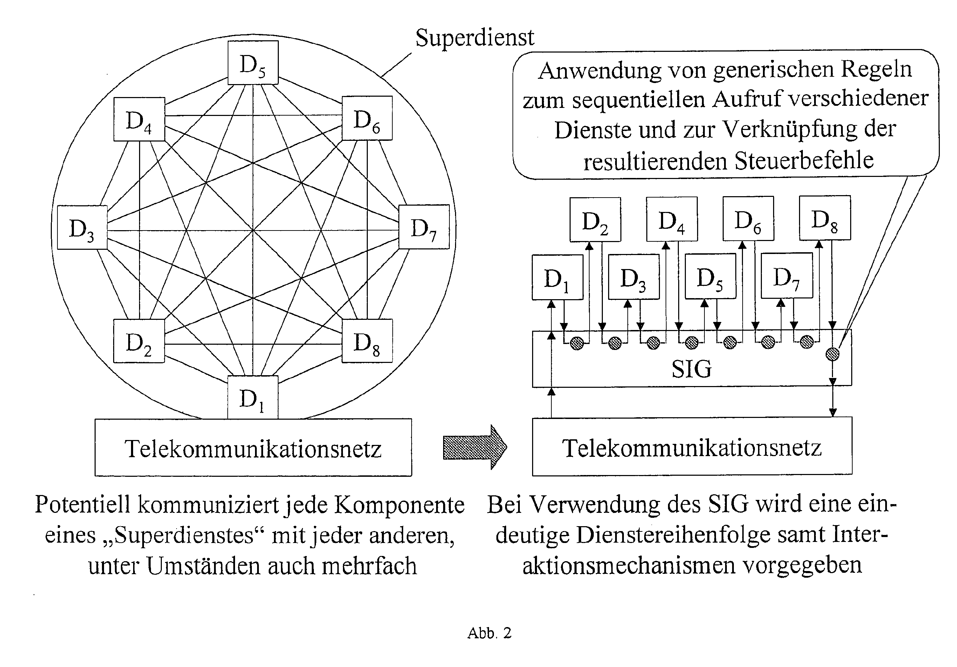

Lösungsvorschläge dazu sehen üblicherweise die Verbindung der Dienste in einer gemeinsamen Dienstelogik vor (Superdienst), siehe Abb. 2. Dies erlaubt es allerdings nicht Dienste unabhängig und auf verschiedenen Plattformen anzubieten. Jeder neue Dienst müsste in die Dienstelogik des Superdienstes eingebaut werden.

Ein weiterer Lösungsvorschlag wird in der Übernahme der IN-Dienste durch OSA/Parlay-Applikationen gesehen. Das löst jedoch das Problem der Mehrfachbeeinflussung der Verbindungssteuerung noch nicht. Da sich laut Standard auch nur jeweils eine OSA/Parlay Applikation zur Verbindungssteuerung für ein Triggerereignis registrieren kann, kann auch nur jeweils ein Dienst steuernd eingreifen. Daher ist in diesem Fall eine Modifikation der Dienste erforderlich, sodass sie untereinander die benötigten Informationen austauschen können.

Alle bisher vorgeschlagenen Mechanismen erfordern die Anpassung der verwendeten Dienste und sind daher mit erheblichem Aufwand verbunden. Insbesondere ist es bei Installation neuer Dienste unter Umständen nötig, einige oder alle der bestehenden Dienste anzupassen um die erforderlichen Informationen mit den neuen Diensten auszutauschen. Außerdem sind Lösungen auf Diensteebene spezifisch für die verwendete Diensteplattform, ermöglichen also beispielsweise ausschließlich die Kommunikation zwischen verschiedenen OSA-Diensten aber nicht zwischen OSA- und IN-Diensten.

In der WO 02/23890 A2 wird zur netzunabhängigen Definition und Steuerung von Diensten, die es erlauben, auf allen mit der Dienststeuerung verbundenen Netzen Dienste ausführen zu können, ein System vorgeschlagen, das eine Steuerung von multimedialen Informations- und Kommunikationsdiensten erlaubt, die frei von jeglichen Aspekten der benutzten Kommunikationsnetze sind. Die Dienstleistungseinheit besteht aus zwei grundlegenden Blöcken, der Dienststeuereinheit und der Kommunikationssteuereinheit. Die Dienstleistungseinheit ermöglicht es, Dienste, die von einem Benutzer angefordert werden, über unterschiedliche Informations- und Kommunikationszwecke auszuführen. Die Netze werden je nach Eingang für den angeforderten Dienst von einer Kommunikationssteuereinheit ausgewählt. Die Ausführung des Dienstes in der Dienststeuereinheit erfolgt unabhängig von der Wahl des Netzes und dessen netzspezifischen Details.

Der Erfindung liegt die Aufgabe zu Grunde, ein Verfahren für die Interaktion von Diensten auf Telekommunikationsplattformen bereitzustellen, das die Einschränkungen im Stand der Technik soweit wie möglich beseitigt und die Weiterleitung, Filterung und Anpassung von Signalisierungsinformationen an mehrere Diensteplattformen und Dienste ermöglicht.

Gelöst wird diese Aufgabe gemäß der Erfindung mit einem Verfahren mit den Merkmalen des Anspruches 1.

Bevorzugte Weiterbildungen des erfindungsgemäßen Verfahrens sind Gegenstand der Unteransprüche.

Durch das erfindungsgemäße Verfahren ist es möglich, Dienste auf mehreren Plattformen zu kombinieren, ohne die einzelnen Dienste zu modifizieren. Zum Beispiel können vorhandene IN-Dienste ohne funktionale Modifikationen mit OSA-Diensten kombiniert werden. Dadurch wird die Entwicklung und Integration zukunftsweisender Telekommunikationsdienste wesentlich erleichtert, und es stehen zusätzliche technische Möglichkeiten durch die Kombination unterschiedlicher Dienste zur Verfügung. Die dazu erforderliche Kommunikation der Diensteplattformen lässt sich z.B. durch ein Adaptermodul mit Interaktions- und Weiterleitungsfunktion realisieren und wird in der Folge als Service Interaction Gateway, SIG bezeichnet.

Das erfindungsgemäße Verfahren gliedert sich zeitlich im wesentlichen in zwei Abschnitte: die Verwaltung der Triggerkriterien sowie die Abarbeitung der Dienste.

Triggerkriterien sind DP-spezifisch, daher treten Konflikte zwischen Diensten die den selben DP verwenden auf. Entsprechend muss das Verfahren für jeden DP unabhängig angewandt werden (das BCSM wird nicht verändert). Um diese Konflikte zu vermeiden, muss eine Reihung der Dienste, die den selben DP verwenden an Hand von Prioritäten erfolgen. Die Prioritäten der Dienste müssen bei der Aufnahme der Dienste ins Produktportfolio manuell im SIG konfiguriert werden. Die Festlegung der Prioritäten der Dienste erfolgt mittels Analyse der Dienste für jeden DP gesondert.

Wenn ein Dienst versucht sich für ein Auslöseereignis (in weiterer Folge Triggerereignis genannt) zu registrieren und Triggerkriterien zu setzen, überprüft das SIG zunächst etwaige Überlappungen mit bereits gesetzten Triggerkriterien. Danach wird die Obermenge der Triggerkriterien aus bereits bestehenden und neu zu setzenden Kriterien bestimmt und im SIG eingetragen. Eine entsprechende Obermenge muss auch in den Verbindungseinrichtungen (z.B. HLR) entweder vorher konfiguriert sein oder dynamisch eingetragen werden, sodass alle Auslöseereignisbenachrichtigungen (im Folgenden Triggernotifikationen genannt) zu diesen Kriterien an das SIG weitergeleitet werden.

Die Abarbeitung der Dienste erfolgt für jeden DP beim Eintreten eines Triggerereignisses entsprechend einer vorgegebenen Reihenfolge. Diese Reihenfolge wird bestimmt an Hand der für dieses Triggerereignis registrierten Dienste (abhängig von den ausgewählten Diensten des Benutzers) und deren konfigurierter Prioritäten.

Bei der Abarbeitung der Dienste dient das Service Interaction Gateway einerseits zum Anpassen und Weiterleiten der erforderlichen Signalisierungsnachrichten (Triggernotifikationen und Steuerbefehle) an die jeweiligen Diensteplattformen bzw. Dienste, andererseits zur Verwaltung und Steuerung der Interaktionen. Somit ist es möglich, mehrere den Rufaufbau beeinflussende Dienste in einer frei konfigurierbaren Reihenfolge auszuführen. Dabei ist es unerheblich, auf welcher Diensteplattform (IN, OSA, etc.) die Dienste ausgeführt werden. Die Steuerbefehle der aufgerufenen Dienste werden im Service Interaction Gateway verknüpft, gefiltert und an das Telekommunikationsnetz weitergeleitet.

Die Interaktion von jeweils einem oder mehreren Diensten auf Basis von IN, OSA, oder ähnlichen Konzepten, ist somit möglich.

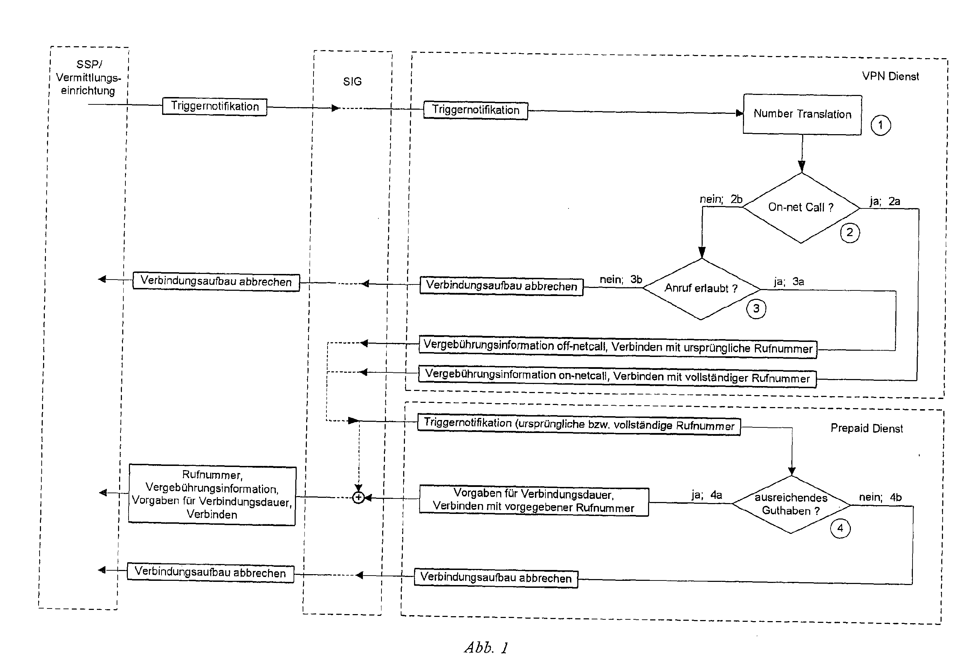

Die Funktion des SIG wird nachfolgend an Hand der Interaktion eines VPN-Dienstes mit einem Prepaid-Dienst gezeigt (siehe Abb. 1):

Dabei handelt es sich um 2 Dienste, die auf den gleichen Trigger Detection Point triggern. Beide Dienste werden aufgerufen, wenn der Anrufer sowohl Teilnehmer eines VPNs ist, als auch mit Wertkarte telefoniert und somit den Prepaid Dienst in Anspruch nimmt. Ohne SIG kann der Anrufer nur einen der beiden Dienste nutzen.

Um beide Dienste nutzen zu können, muss im SIG die Reihenfolge der Abarbeitung der Dienste beispielsweise mit einem Prioritätsmechanismus festgelegt sein. In diesem Beispiel muss die Triggernotifikation zuerst zum VPN-Dienst gehen.

Der VPN-Dienst setzt eine etwaige Kurzrufnummer in die vollständige Rufnummer um (Schritt 1). Zusätzlich wird in Schritt 2 entschieden, ob der angerufene Teilnehmer Mitglied des VPN ist, Fall 2a: VPN interner Anruf (on-net call). Andernfalls handelt es sich um Fall 2b: VPN externer Anruf (off-net call). Die Vergebührungsinformation wird dementsprechend erzeugt.

In Fall 2b muss an Hand der Rufnummer entschieden werden (Schritt 3), ob dieser Anruf erlaubt (Fall 3a) oder gesperrt (Fall 3b) ist.

Dem SIG werden folgende Informationen übermittelt:
- Fall 2a: Vollständige Rufnummer des angerufenen Teilnehmers, Verbindung herstellen, Vergebührungsinformation für on-net call setzen.
- Fall 3a: Ursprüngliche Rufnummer des angerufenen Teilnehmers, Verbindung herstellen, Vergebührungsinformation für off-net call setzen.
- Fall 3b: Verbindungsaufbau abbrechen.

In Fall 3b aktiviert das SIG den Prepaid-Dienst nicht, sondern übermittelt dem Telekommunikationsnetz den Steuerbefehl zum Abbrechen des Verbindungsaufbaus.

In Fall 2a muss das SIG die Triggernotifikation mit der vollständigen Rufnummer des angerufenen Teilnehmers ergänzen.

In Fall 2a und 3a muss das SIG den Prepaid-Dienst aktivieren. Der Prepaid-Dienst überprüft das verfügbare Guthaben (Schritt 4). Wenn ausreichend Guthaben vorhanden ist, kann der Verbindungsaufbau fortgesetzt werden (Fall 4a). Andernfalls wird der Verbindungsaufbau abgebrochen (Fall 4b).

Dem SIG werden folgende Informationen übermittelt:
- Fall 4a: Vorgaben für die Verbindungsdauer, Verbindung herstellen.
- Fall 4b: Verbindungsaufbau abbrechen.

Nun wertet das SIG die Steuerinformationen beider Dienste aus. Wenn beide Dienste die Verbindung erlauben (Fall 2a/3a und 4a), werden dem Telekommunikationsnetz die Gebühreninformation und die vollständige Rufnummer des Angerufenen (aus dem VPN-Dienst) sowie Vorgaben für die Verbindungsdauer (aus dem Prepaid-Dienst) übermittelt. Andernfalls (Fall 4b) wird dem Telekommunikationsnetz der Steuerbefehl zum Abbrechen des Verbindungsaufbaus übermittelt.

Nachfolgend werden bevorzugte Ausführungsformen der Erfindung mit Bezug auf die beiliegenden Abbildungen beschrieben.

Es zeigt:
Abb. 1: Ein Beispiel für die Interaktion von VPN und Prepaid mittels SIG;
Abb. 2: Eine Gegenüberstellung Superdienst versus Diensteinteraktion mittels SIG;
Abb. 3: Ein Beispiel für Reihung der Dienste mittels Dienstepriorisierung;
Abb. 4: Ein Verfahren zur Verwaltung und Provisionierung von Triggerkriterien;
Abb. 5: Ein Beispiel für Triggerverwaltung;
Abb. 6: Ein Verfahren zur Interaktionssteuerung von Diensten bei Verbindungssteuerungen in Telekommunikationsnetzen;
Abb. 7: Ein Beispiel für eine Dienste-Interaktion;
Abb. 8: Eine erste SIG Ausführungsform: eigenständige Plattform;
Abb. 9: Eine zweite SIG Ausführungsform: integriert in die OSA Plattform.

In Abb. 2 ist eine Gegenüberstellung eines sogenannten Superdienstes und einer Diensteinteraktion mittels des erfindungsgemäßen SIG gezeigt.

Wie bereits zuvor erwähnt ist, ist ein Lösungsvorschlag für die Diensteinteraktion die Schaffung eines Superdienstes, der die Funktionalität aller Einzeldienste beinhaltet. Dabei können alle Einzeldienste untereinander kommunizieren, müssen jedoch angepasst werden, wenn ein neuer Dienst hinzugefügt wird.

Mit der Einführung des erfindungsgemäßen SIG werden die vorhandenen Dienste in einer definierten Reihenfolge abgearbeitet. Die interaktion der Dienste beschränkt sich auf das Austauschen vordefinierter Signalisierungsnachrichten mit dem SIG. Das SIG verwendet generische Regeln zum Aktivieren der Dienste und zum Weiterleiten der Steuerbefehle an die Vermittlungseinrichtungen. Das Hinzufügen neuer Dienste erfordert keine funktionellen Anpassungen der bestehenden Dienste. Es erfordert eine Konfiguration des SIG hinsichtlich der Priorisierung des neuen Dienstes.

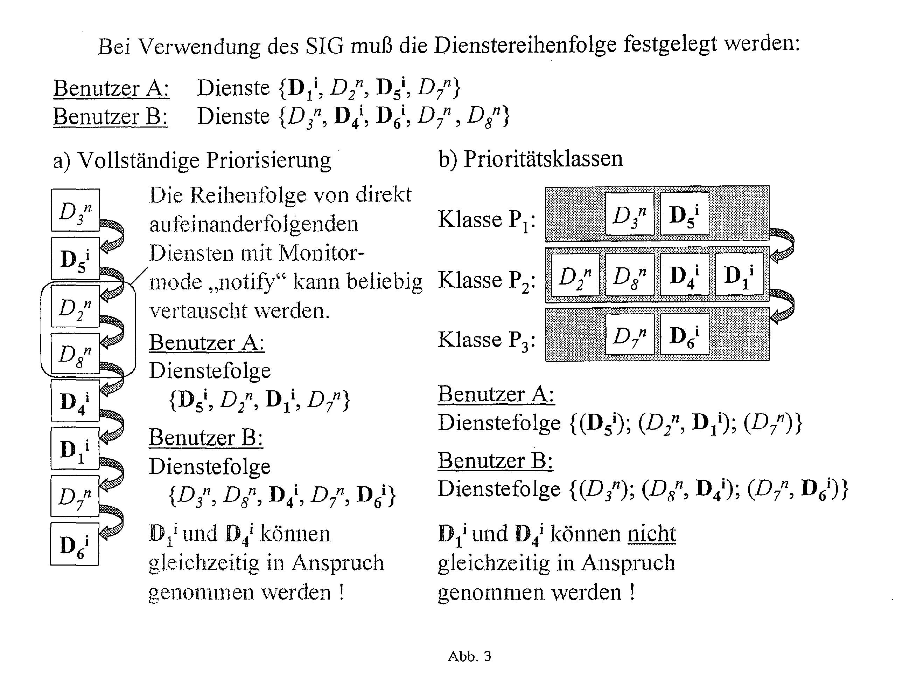

In Abb. 3 ist ein Beispiel für eine Reihung der Dienste mittels Dienstepriorisierung gezeigt. Die Abarbeitung der Dienste erfolgt für jeden DP beim Eintreten eines Triggerereignisses entsprechend einer vorgegebenen Reihenfolge. Diese Reihenfolge wird bestimmt an Hand der für dieses Triggerereignis registrierten Dienste (abhängig von den ausgewählten Diensten des Benutzers) und deren konfigurierter Prioritäten. Diese Prioritäten werden bei der Aufnahme der Dienste ins Produktportfolio manuell im SIG konfiguriert. Die Festlegung der Prioritäten der Dienste erfolgt mittels Analyse der Dienste für jeden DP gesondert.

Der k-te Dienst wird mit **D**_{**k**}^{**i**} bezeichnet, wenn im zugehörigen Triggerkriterium der Monitormode "interrupt" (fett, Superscript "i") gesetzt wurde und der Dienst Steuerbefehle zur Verbindungssteuerung erzeugt. Wenn der Dienst nur benachrichtigt werden will und daher im zugehörigen Triggerkriterium der Monitormode "notify" gesetzt wurde, wird der k-te Dienst mit *D*_{*k*}^{*n*} bezeichnet (kursiv, Superscript "n").

Mögliche Ausführungsformen des Prioritätsmanagements:
a) Vollständige Priorisierung aller verfügbaren Dienste, es entsteht also eine komplette Reihenfolge D₁→D₂→D₃→...→Dₖ. Diese Variante eignet sich besonders für eine geringe Anzahl von Diensten.

Im Beispiel gibt es die Dienste {**D**_{**1**}^{**l**}, *D*_{*2*}^{*n*}*, D*_{*3*}^{*n*}*,* **D**_{**4**}^{**l**}, **D**_{**5**}^{**l**}, **D**_{**6**}^{**l**}, *D*_{*7*}^{*n*}*, D*_{*8*}^{*n*}}, deren vollständige Priorisierung die Reihenfolge {*D*_{*3*}^{*n*}, **D**_{**5**}^{**l**}, *D*_{*2*}^{*n*}*, D*_{*8*}^{*n*}, **D**_{**4**}^{**l**}**, D**_{**1**}^{**l**}**,** *D*_{*7*}^{*n*}, **D**_{**6**}^{**l**}} ergibt. Für den Benutzer A mit den Diensten **{D**_{**1**}^{**l**}, *D*_{*2*}^{*n*}, **D**_{**5**}^{**l**}, *D*_{*7*}^{*n*}} ergibt sich somit die Reihenfolge der Dienste zu {**D**_{**5**}^{**l**}, *D*_{*2*}^{*n*}, **D**_{**1**}^{**l**}, *D*_{*7*}^{*n*}}. Für den Benutzer B mit den Diensten {*D*_{*3*}^{*n*}, **D**_{**4**}^{**l**}, **D**_{**6**}^{**l**}, *D*_{*7*}^{*n*}, *D*_{*8*}^{*n*}} ergibt sich somit die Reihenfolge der Dienste zu {*D*_{*3*}^{*n*}*, D*_{*8*}^{*n*}, **D**_{**4**}^{**l**}, *D*_{*7*}^{*n*}, **D**_{**6**}^{**l**}}.
b) Priorisierung mittels Prioritätsklassen. In diesem Fall wird jeder Dienst Dₖ einer Prioritätsklasse Pⱼ zugeordnet. Jede Prioritätsklasse kann mehrere Dienste beinhalten. Dadurch ist die Verwaltung stark vereinfacht, weil es deutlich weniger Prioritätsklassen als Dienste gibt. Es können mehrere Dienste, die die Verbindungssteuerung beeinflussen wollen, in die gleiche Prioritätsklasse Pⱼ eingeordnet werden und das SIG entsprechend konfiguriert werden. Dies wird möglich, weil ein Benutzer jeweils nur einen solchen Dienst pro Prioritätsklasse in Anspruch nehmen darf. Zusätzlich können sich in jeder Prioritätsklasse beliebig viele Dienste für eine Benachrichtigung über das Eintreten des Triggerkriteriums registrieren (diese können in die Verbindungssteuerung aber nicht eingreifen und setzen den Monitormode "notify"). Diese werden in beliebiger Reihenfolge abgearbeitet.

In diesem Beispiel sind die Prioritätsklassen wie folgt:
P₁: {*D*_{*3*}^{*n*}, **D**_{**5**}^{**l**}}; P₂: {*D*_{*2*}^{*n*}*, D*_{*8*}^{*n*}, **D**_{**4**}^{**l**}, **D**_{**1**}^{**l**}}; P₃: {*D*_{*7*}^{*n*}, **D**_{**6**}^{**l**}}

Für den Benutzer A ergibt sich somit die Reihenfolge der Dienste zu {(**D**_{**5**}^{**l**}); (*D*_{*2*}^{*n*}, **D**_{**1**}^{**l**}); (*D*_{*7*}^{*n*})}. Für den Benutzer B ergibt sich somit die Reihenfolge der Dienste zu {(*D*_{*3*}^{*n*}); (*D*_{*8*}^{*n*}, **D**_{**4**}^{**i**}); (*D*_{*7*}^{*n*}, **D**_{**6**}^{**l**})}.
c) Dynamische Priorisierung mittels Regelmechanismen im SIG. Die Regelmechanismen können beispielsweise auf programmierten Logiken (Skripts) basieren, welche alle Informationen des SIG auswerten können, einschließlich die aktuellen Triggerkriterien und Dienstbeschreibungen auf Basis von strukturierten Vereinbarungen (Service Level Agreements, Web-Service-Description-Language) oder informellen Methoden.

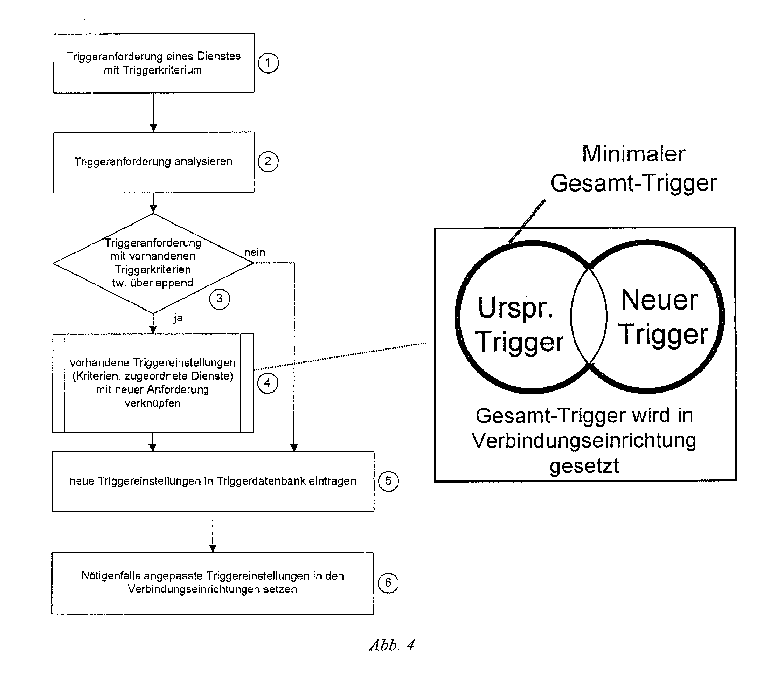

Abb. 4 zeigt ein Verfahren zur Verwaltung und Einrichtung (Provisionierung) von Triggerkriterien. Ein Dienst D₁ beabsichtigt die Beeinflussung eines Anrufes. Zu diesem Zweck werden Triggerkriterien definiert. Diese bestimmen, bei welchen Anrufen der Dienst ausgeführt werden soll, z.B. wenn der Anruf von Rufnummer A={1234} zu Rufnummer B={5678} aufgebaut werden soll, oder für alle Anrufer mit Rufnummer A={0000 ... 9999}. Die Triggerkriterien werden beim SIG registriert (Schritt 1). Nachfolgend werden die Triggerkriterien und die Priorität des Dienstes überprüft (Schritt 2).

Wenn die Triggerkriterien von D₁ nicht mit bestehenden Kriterien überlappen (Schritt 3/nein), dann werden die Kriterien ohne Modifikation in die Triggerdatenbank eingetragen (Schritt 5). Beispielsweise kann ein Dienst D₁ als Kriterium die Anrufer-Nummer A={1111} registrieren, obwohl ein anderer Dienst bereits für Anrufer-Nummer A={1112} registriert ist.

Es kann jedoch vorkommen, dass die Triggerkriterien von D₁ mit bestehenden Triggerkriterien überlappen (Schritt 3/ja). Zum Beispiel kann D₁ als Kriterium die Anrufer-Nummern A={0000 ... 8888} anfordern, während D₂ bereits für alle Anrufer-Nummern A={5555 ... 9999} registriert ist. In Netzkonfigurationen ohne SIG, z.B. ausschließlich IN oder OSA Systemumgebung, kann D₁ dieses Kriterium nicht registrieren und ist daher nicht anwendbar. Das SIG hingegen analysiert die Triggerkriterien und identifiziert die gemeinsame Obermenge der Kriterien, im obigen Beispiel also A={0000 ... 9999} (Schritt 4).

Bei Verwendung von Prioritätsklassen darf sich pro Prioritätsklasse nur maximal ein Dienst **D**_{**m**}^{**l**}, der die Verbindungssteuerung beeinflusst, für ein Triggerkriterium registrieren. Wenn sich ein weiterer Dienst **D**_{**k**}^{**l**} dieser Prioritätsklasse mit überlappenden Triggerkriterien registrieren will, so wird dies vom SIG nicht zugelassen. Bei überlappenden Kriterien darf das SIG daher die Registrierung eines Dienstes **D**_{**k**}^{**l**} aus Klasse Pj nur zulassen, wenn noch kein anderer Dienst **D**_{**m**}^{**i**} aus Klasse Pⱼ registriert ist. Es können jedoch mehrere Dienste **D**_{**k**}^{**l**} einer Prioritätsklasse mit nicht überlappenden Triggerkriterien registriert sein.

Anschließend wird nun die gemeinsame Obermenge der Triggerkriterien in die Triggerdatenbank eingetragen (Schritt 5).

Wenn die Verbindungseinrichtungen dynamisch konfiguriert werden können, muss das SIG zusätzlich die Obermenge der Triggerkriterien in die Verbindungseinrichtungen (z.B. HLR) eintragen (Schritt 6). Andernfalls müssen die Verbindungseinrichtungen so vorkonfiguriert sein, dass alle Verbindungen über das SIG geführt werden. Dadurch ist sichergestellt, dass das SIG alle Verbindungen analysieren und ggf. an die zugeordneten Dienste weiterleiten kann.

Wenn sich ein neuer Dienst, der nicht in den Prioritätsregeln erfasst ist, für einen Trigger registrieren möchte, dann gelten die bisherigen Einschränkungen (Standardverhalten des Systems). In diesem Fall sind überlappende Kriterien weiterhin verboten, eine Interaktion mit anderen Diensten ist nicht möglich.

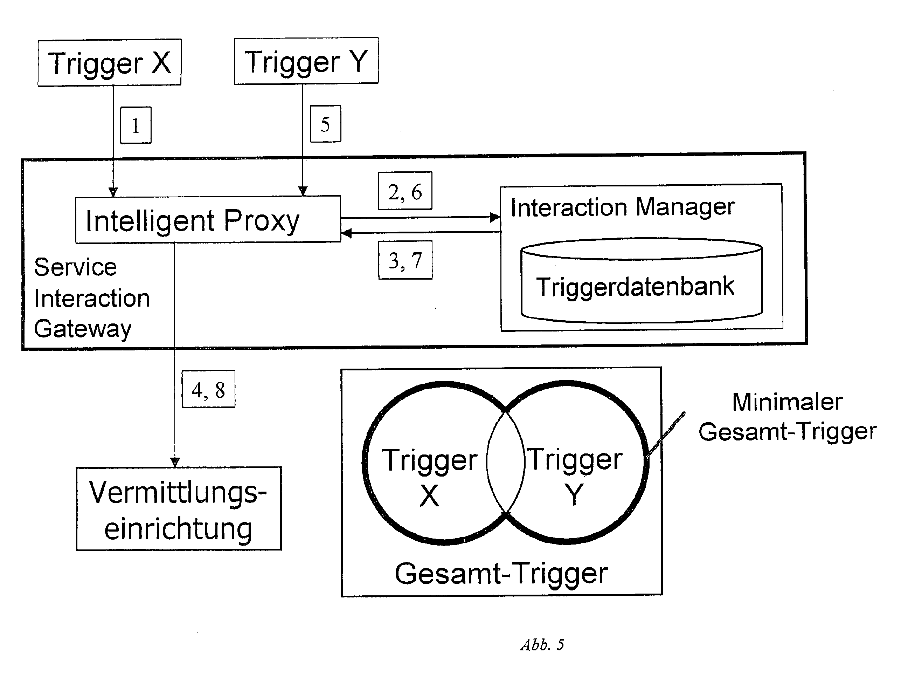

In Abb. 5 ist ein Beispiel für eine Triggerverwaltung dargestellt. Damit mehrere Dienste über ein Triggerereignis benachrichtigt werden können, müssen sich diese Dienste für dieses Triggerereignis registrieren und ihre Triggeranforderungen stellen. Derzeit wird eine Triggeranforderung mit zugehörigem Triggerkriterium in den Vermittlungseinrichtungen eingetragen und es kann sich kein weiterer Dienst für dieses Triggerereignis registrieren.

Durch die Verwendung des SIG können sich aber mehrere Dienste für ein Triggerereignis im SIG registrieren, während in den Vermittlungseinrichtungen das SIG als Diensteplattform provisioniert ist. Ein Dienst sendet dazu seine Triggeranforderung (Trigger X: 1234 ruft 5555,6666) an das SIG (Schritt 1). Die Weiterleitungsfunktion (Intelligent Proxy) übermittelt diese Triggeranforderung an die Interaktionssteuerung (Interaction Manager) (Schritt 2), die nun ihrerseits nach bereits eingetragenen überlappenden Triggerkriterien sucht. Sofern noch kein Eintrag für dieses Triggerkriterium vorliegt, wird diese Anforderung in die Triggerdatenbank eingetragen. Weiters teilt der Interaction Manager dem Intelligent Proxy mit (Schritt 3), diese Triggeranforderung an die Vermittlungseinrichtung weiterzuleiten. Der Intelligent Proxy veranlasst die Provisionierung in der Vermittlungseinrichtung (Schritt 4).

Erfolgt nun eine weitere Triggeranforderung (Trigger Y: 1234 ruft 4444,5555) an das SIG, so wird diese wieder vom Intelligent Proxy empfangen (Schritt 5) und an den Interaction Manager weitergeleitet (Schritt 6). Der Interaction Manager nimmt wieder die Überprüfung auf überlappende Triggerereignisse vor und verfährt wie in Abb. 4 beschrieben. Der Interaction Manager teilt dem Intelligent Proxy in weiterer Folge ein neues gesamtes Triggerkriterium (1234 ruft 4444, 5555, 6666) zur Weiterleitung und Provisionierung in der Vermittlungseinrichtung mit (Schritt 7). Der Intelligent Proxy veranlasst die neue Provisionierung für das Gesamttriggerkriterium in der Vermittlungseinrichtung (Schritt 8).

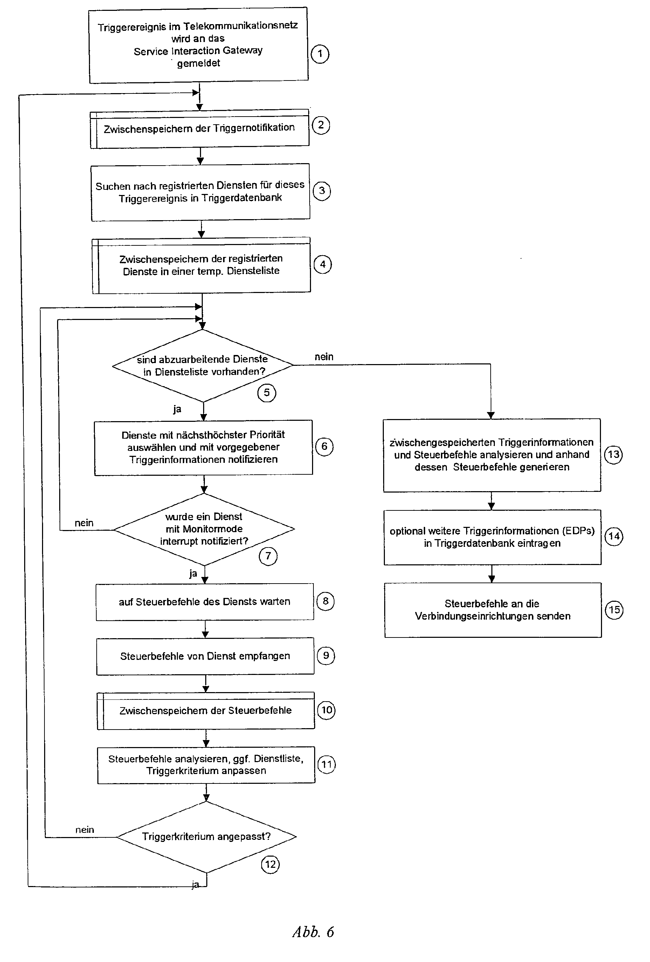

Mit Bezug auf Abb. 6 wird das Verfahren zur Interaktionssteuerung von Diensten bei Verbindungssteuerungen in Telekommunikationsnetzen näher erläutert.

Dieses Verfahren wird immer dann durchlaufen, wenn sich mehrere Dienste für ein Triggerkriterium registriert haben. Z.B. die Dienste D₁ und D₂ verwenden als gemeinsames Kriterium die Anrufernummer A={1234} und eine beliebige Rufnummer B. Tritt dieses Triggerereignis ein, benachrichtigt das Telekommunikationsnetz das SIG (Schritt 1). Das SIG legt diese einlangende Triggernotifikation ab (Schritt 2). Diese Information wird in weiterer Folge sowohl für die Benachrichtigung der Dienste als auch für die Erzeugung der Steuerbefehle verwendet.

Anhand der Triggernotifikation werden nun die zum eingetretenen Triggerereignis registrierten Dienste in der Triggerdatenbank gesucht (Schritt 3) und in einer temporären Diensteliste abgelegt (Schritt 4). Diese regelt die weitere Reihenfolge der Abarbeitung der Dienste nach den konfigurierten Prioritäten.

Aus dieser Diensteliste (Schritt 5/ja) werden nun alle Dienste mit der nächsthöchsten Priorität ausgewählt und mit den Triggerinformationen notifiziert (Schritt 6). In jeder Prioritätsklasse kann es maximal einen Dienst mit dem Monitormode "interrupt" geben (Schritt 7/ja), d.h. nur dieser Dienst kann in dieser Prioritätsklasse Steuerbefehle an das SIG zurückliefern. Alle anderen Dienste dieser Prioritätsklasse können nur Monitormode "notify" haben und erhalten dementsprechend nur eine Benachrichtigung über das Triggerereignis. Befindet sich kein Dienst mit Monitormode "interrupt" in dieser Prioritätsklasse (Schritt 7/nein), wird mit Schritt 6 für die Dienste der nächst niedrigeren Prioritätsklasse fortgesetzt. Andernfalls werden die Schritte 8-12 wie nachfolgend beschrieben ausgeführt.

Während der Dienst mit dem Monitormode "interrupt" abgearbeitet wird, wartet das SIG auf die Steuerbefehle des Dienstes (Schritt 8). Nachdem die Steuerbefehle des Dienstes empfangen wurden (Schritt 9), werden sie gemeinsam mit der Triggernotifikation temporär abgelegt und zwischengespeichert (Schritt 10). Die Steuerbefehle werden analysiert, um gegebenenfalls die Diensteliste (z.B. geleerte Diensteliste, wenn keine weiteren Dienste mehr aufgerufen werden sollen) bzw. die Triggernotifikation (z.B. veränderte Rufnummer) für nachfolgende Dienste anzupassen (Schritt 11).

Wurde die Triggernotifikation nicht verändert (Schritt 12/nein), so wird die Diensteliste weiter in der beschriebenen Art und Weise abgearbeitet (Schritte 5-12).

Im Falle der Änderung der Triggernotifikation für nachfolgende Dienste (Schritt 12/ja) wird zu Schritt 2 zurückgegangen und das Verfahren erneut durchlaufen.

Sind keine Dienste (mehr) in der Diensteliste (5/nein), so werden die bis zu diesem Zeitpunkt eingelangten Triggernotifikationen und Steuerbefehle analysiert und anhand dessen eindeutige und widerspruchsfreie Steuerbefehle für die Verbindungseinrichtungen generiert (Schritt 13). Diese können z.B. Vergebührungsinformationen, Vorgaben für die Verbindungsdauer und "Verbinden mit Rufnummer" sein. Bei Bedarf werden von Diensten im Rahmen von Steuerbefehlen angeforderte Triggernotifikationen (EDPs) in die Triggerdatenbank eingetragen (Schritt 14). Die generierten Steuerbefehle werden an das Telekommunikationsnetz gesendet (Schritt 15) und führen so die "verknüpfte" Beeinflussung der Verbindungssteuerung aller Dienste durch.

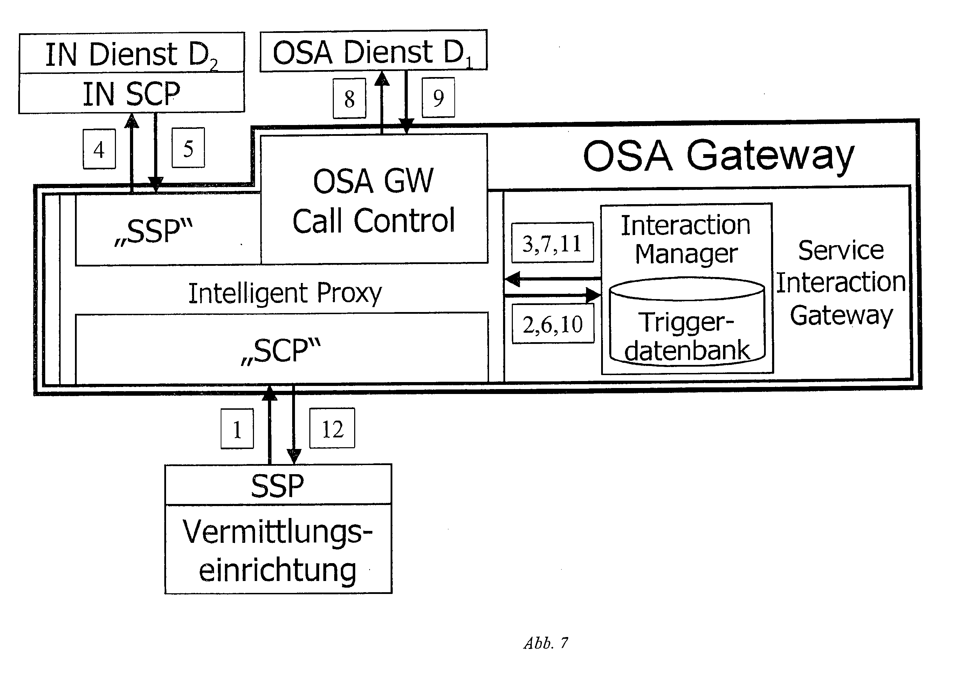

Abb. 7 zeigt ein Beispiel für eine Diensteinteraktion. In diesem Beispiel sind 2 Dienste für ein Triggerkriterium registriert. Dabei hat der Dienst D₁ die Aufgabe zu überprüfen, ob der Anrufer mit dem gewählten Teilnehmer überhaupt verbunden werden darf. Dem Anrufer ist es z.B. nicht erlaubt ins Ausland zu telefonieren, oder er darf nur einen eingeschränkten vorgegebenen Nummernbereich wählen. Der Dienst D₁ sei z.B. ein OSA Dienst, der auf einer OSA Plattform mit integrierter SIG Funktionalität abläuft. Der Anrufer selbst ist ein Prepaid Kunde. Der Prepaid Dienst D₂ ist z.B. ein IN Dienst. Somit verwenden beide Dienste die Anrufernummer als Triggerkriterium. Der OSA Dienst D₁ entscheidet zuerst, ob die Verbindung erlaubt ist. Der IN Prepaid Dienst D₂ regelt anschließend die Verrechnung des Anrufes.

Tritt nun ein entsprechendes Triggerereignis ein, so wird diese Triggernotifikation von der Vermittlungseinrichtung an das SIG geschickt (Abb. 7 Schritt 1 bzw. Abb. 6 Schritt 1), vom Intelligent Proxy empfangen und zwischengespeichert (Abb. 6 Schritt 2). Die Daten (Teilnehmernummern, etc.) werden an den Interaction Manager weitergeleitet (Abb. 7 Schritt 2). Dieser sucht nach registrierten Diensten (Abb. 6 Schritt 3) für diese Triggernotifikation und speichert diese Dienste in einer temporären Diensteliste (Abb. 6 Schritt 4). Die Diensteliste ist nicht leer (Abb. 6 Schritt 5/ja), daher wird der Dienst mit der höchsten Priorität ausgewählt (Abb. 6 Schritt 6), in diesem Fall ist dies der Dienst D₁. Zusätzlich wird dem Intelligent Proxy mitgeteilt an welche Diensteplattform bzw. Plattformkomponente er die Triggernotifikation weiterleiten soll (Abb. 7 Schritt 3). In diesem Fall leitet er die Triggernotifikation intern an die OSA Call Control weiter (Ausführungsform: SIG in OSA Plattform/CC SCS integriert). Dem Dienst D₁ wird mittels der entsprechenden OSA Methode die Triggernotifikation mitgeteilt (Abb. 7 Schritt 4 bzw. Abb. 6 Schritt 6). Da dies ein Dienst mit Monitormode "interrupt" ist (Abb. 6 Schritt 7/ja), wartet das SIG auf Steuerbefehle (Abb. 6 Schritt 8). Der Dienst D₁ entscheidet anhand der gewählten Rufnummer, ob der Anruf gestattet ist und sendet entsprechende Steuerbefehle über die OSA Call Control an das SIG (Abb. 7 Schritt 5 bzw. Abb. 6 Schritt 9). Sollte der Anruf nicht gestattet sein (Fall A), so verwendet der Dienst die entsprechende OSA Methode zur Unterbindung des weiteren Verbindungsaufbaus. Wenn der Anruf erlaubt ist (Fall B), wird die OSA Methode für die Fortsetzung des Verbindunsaufbaus verwendet.

Das SIG wartet während der Abarbeitung des Dienstes D₁ auf dessen Steuerbefehle (Abb. 6 Schritt 8). Der empfangene Steuerbefehl wird vom Intelligent Proxy entgegengenommen (Abb. 6 Schritt 9), zwischengespeichert (Abb. 6 Schritt 10) und dem Interaction Manager mitsamt den Parametern mitgeteilt (Abb. 7 Schritt 6). Der Interaction Manager analysiert den gelieferten Steuerbefehl und stellt fest, ob die Diensteliste bzw. die Triggernotifikation für nachfolgende Dienste angepasst werden müssen (Abb. 6 Schritt 11). In diesem Beispiel ändert sich die Triggernotifikation in keinem Fall (Abb. 6 Schritt 12/nein), da die Rufnummer gleich bleibt.

Im Fall A wird die Diensteliste dahingehend geändert (Abb. 6 Schritt 11), dass keine weiteren Dienste mehr aufgerufen werden. Diese werden daher aus der temporären Diensteliste gelöscht. Da sich nun kein weiterer Dienst in der Diensteliste befindet (Abb. 6 Schritt 5), entscheidet der Interaction Manager anhand der bisher erhaltenen Steuerbefehle, welche Steuerinformation an die Vermittlungseinrichtungen weitergegeben werden soll (Abb. 6 Schritt 13). Der Interaction Manager wird dem Intelligent Proxy mitteilen, den Verbindungsaufbau zu beenden (Abb. 7 Schritt 8). Da der Verbindungsaufbau beendet wird, müssen auch keine Triggerinformationen (EDPs) in die Triggerdatenbank eingetragen werden (Abb. 6 Schritt 14). Abschließend sendet der Intelligent Proxy den Steuerbefehl zum Beenden des Verbindungsaufbaues an die Vermittlungseinrichtung (Abb. 7 Schritt 12 bzw. Abb. 6 Schritt 15).

Im Fall B ändert sich die Diensteliste nicht und da sich noch ein weiterer Dienst in der Diensteliste befindet (Abb. 6 Schritt 5), wird der Dienst mit der nächstfolgenden Priorität, in diesem Fall der Prepaid Dienst D₂, ausgewählt (Abb. 6 Schritt 6). Der Interaction Manager teilt nun dem Intelligent Proxy mit, dass die Triggernotifikation an den IN SCP mit dem Prepaid Dienst D₂ weitergeleitet werden soll (Abb. 7 Schritt 7). Der Intelligent Proxy leitet die empfangene und zwischengespeicherte Triggernotifikation unverändert an den IN SCP weiter (Abb. 7 Schritt 8 bzw Abb. 6 Schritt 6). Wieder wartet das SIG während der Abarbeitung des Dienstes auf dessen Steuerbefehle (Abb. 6 Schritt 8). Der Dienst liefert nun in Abhängigkeit vom zur Verfügung stehenden Guthaben des Anrufers die Steuerbefehle für den weiteren Rufaufbau. Wenn ausreichend Guthaben zur Verfügung steht, kann der Verbindungsaufbau fortgesetzt werden, einschließlich Setzen der erforderlichen Parameter (Verrechnungsmodus, Verbindungsüberwachung). Hat der Anrufer kein Guthaben, so wird der Steuerbefehl zum Beenden des Verbindungsaufbaus an das SIG weitergeleitet (Abb. 7 Schritt 9). Dieser Steuerbefehl wird wiederum vom Intelligent Proxy entgegengenommen (Abb. 6 Schritt 9), zwischengespeichert (Abb. 6 Schritt 10) und dem Interaction Manager mitgeteilt (Abb. 7 Schritt 10). Genauso wie im Fall A ergibt sich daraus, dass keine weiteren Dienste mehr ausgeführt werden müssen. Das bedeutet, dass die Diensteliste geleert wird (Abb. 6 Schritt 11). Da, wie oben bereits erwähnt, keine Änderung der Triggernotifikation erfolgt (Abb. 6 Schritt 12/nein) und die Diensteliste nun keine weiteren ab zu arbeitenden Dienste enthält (Abb. 6 Schritt 5/nein), werden die zwischengespeicherten Triggernotifikation und die erhaltenen Steuerbefehle (einerseits Fortsetzung und andererseits Abbruch des Verbindungsaufbaus) analysiert und verknüpft (Abb. 6 Schritt 13). Der daraus resultierende Steuerbefehl zum Beenden des Verbindungsaufbaus wird dem Intelligent Proxy vom Interaction Manager mitgeteilt (Abb. 7 Schritt 11). Der Intelligent Proxy sendet den Steuerbefehl zum Beenden des Verbindungsaufbaues an die Vermittlungseinrichtung (Abb.7 Schritt 12 bzw. Abb. 6 Schritt 15).

Nachfolgend werden besonders bevorzugte Ausführungsformen der Erfindung beschrieben.

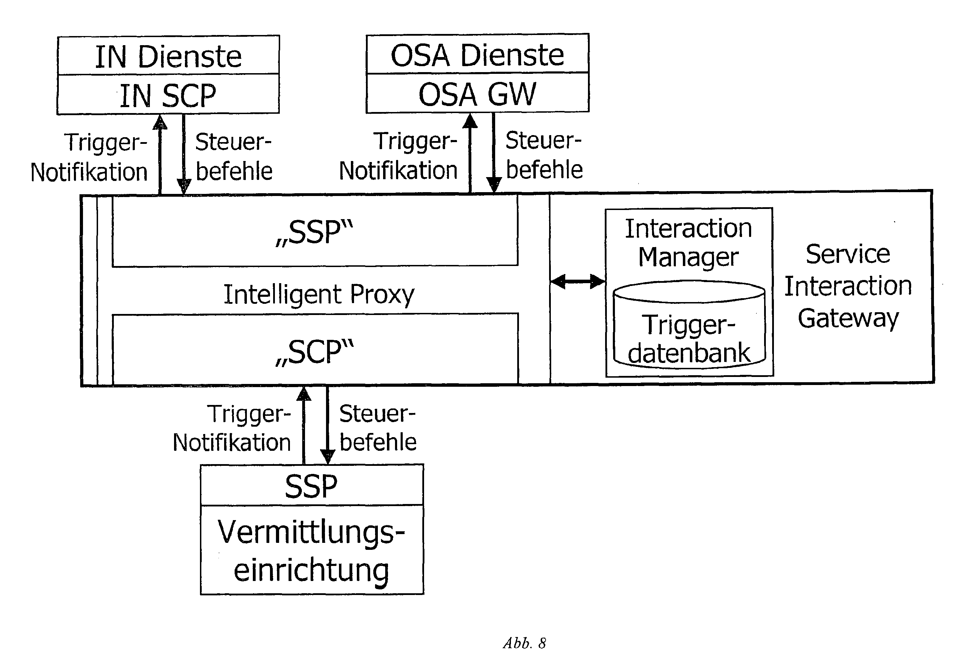

Die Ausführungsform des SIG gemäß Abb. 8 als eigenständige Plattform besteht im Wesentlichen aus 2 Teilen, dem Intelligent Proxy und dem Interaction Manager.

Der Intelligent Proxy hat folgende Aufgaben:
- Empfangen von Triggeranforderungen der Diensteplattformen und weiterleiten an den Interaction Manager
- Setzen der Trigger in den Vermittlungseinrichtungen nach Vorgabe durch den Interaction Manager
- Triggernotifikationen von den Vermittlungsstellen (SSP) zu empfangen, zwischenzuspeichern und an den Interaction Manager weiterleiten. Beim Empfang von Triggernotifikationen verhält sich der Intelligent Proxy wie ein SCP.
- Weiterleiten der angepassten Triggernotifikationen an die vom Interaction Manager bestimmte Diensteplattform. Dabei verhält sich der Intelligent Proxy wie ein SSP. Steuerbefehle von den Diensteplattformen empfangen, zwischenspeichern und an den Interaction Manager weiterleiten. Beim Empfang von Steuerbefehlen verhält sich der Intelligent Proxy wie ein SSP.
- Weiterleiten der vom Interaction Manager generierten Steuerbefehle an die Vermittlungsstellen. Dabei verhält sich der Intelligent Proxy wie ein SCP.

Der Interaction Manager beinhaltet die Diensteliste mit Prioritätsinformationen und eine Triggerdatenbank. In der Datenbank sind sämtliche Triggerinformationen für alle Diensteplattformen und Dienste abgelegt. Folgende Aufgaben werden vom Interaction Manager wahrgenommen:
- Empfangen der Triggeranforderungen vom Intelligent Proxy
- Überprüfung auf Überlappung des Triggerkriteriums mit schon vorhandenen Triggerkriterien in der Triggerdatenbank
- Bestimmung der Gesamttriggeranforderung als Obermenge von neuer und vorhandenen Triggeranforderungen
- Eintragen der neuen Triggeranforderung in die Triggerdatenbank
- Empfangen der Triggerinformationen vom Intelligent Proxy und suchen nach registrierten Diensten für dieses Triggerkriterium in der Triggerdatenbank
- Erstellen einer Diensteliste mit den abzuarbeitenden Diensten und der Reihenfolge der Abarbeitung entsprechend der konfigurierten Prioritäten
- Auswerten der empfangenen Steuerbefehle
- Generieren der Steuerbefehle
- Steuern des Intelligent Proxy
   o Vorgabe der in die Vermittlungseinrichtung zu setzenden Trigger
   o Vorgabe der weiterzuleitenden Triggernotifikationen an die Diensteplattformen
   o Vorgabe der weiterzuleitenden Steuerbefehle an die Vermittlungseinrichtung

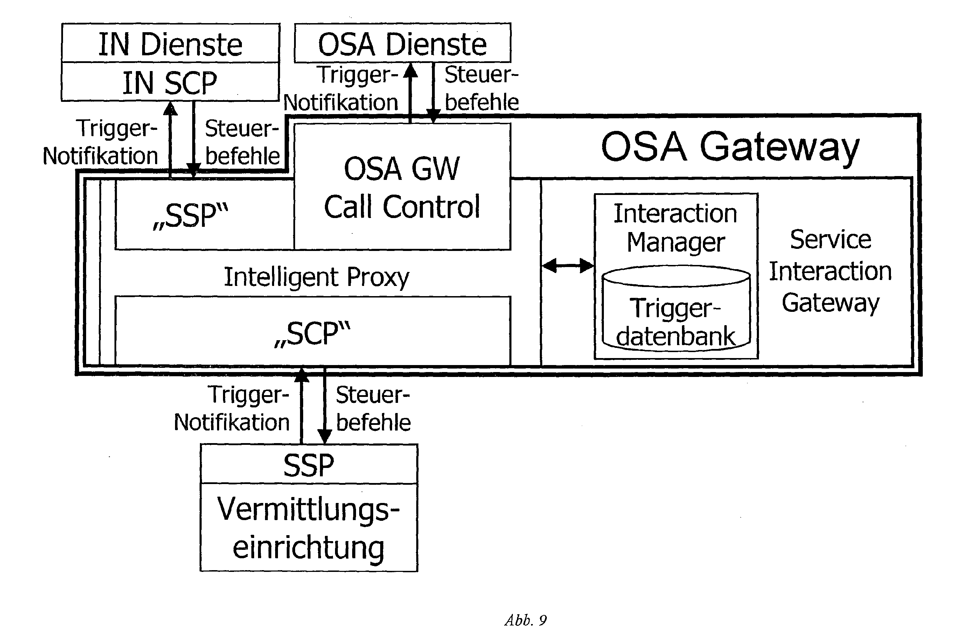

Abb. 9 zeigt die Integration in eine OSA Plattform/CC SCS. Im Gegensatz zur Ausführungsplattform als eigenständige Plattform wird hier das SIG in die OSA Plattform integriert.

Daraus ergibt sich der Unterschied zur eigenständigen Plattform, dass die Weitergabe der Signalisierungsinformationen für OSA-Dienste direkt über die OSA Call Control Schnittstelle erfolgt. Die Signalisierungsinformationen müssen nicht erst von einer weiteren Plattform auf die OSA Schnittstelle umgesetzt werden, da die OSA Call Control Funktionalität Teil des Intelligent Proxy ist.

Ist das SIG in die OSA Plattform integriert, besteht es ebenso aus folgenden 2 Teilen, dem Intelligent Proxy und dem Interaction Manager.

Der Intelligent Proxy hat folgende Aufgaben:
- Empfangen von Triggeranforderungen der Diensteplattformen und weiterleiten an den Interaction Manager
- Setzen der Trigger in den Vermittlungseinrichtungen nach Vorgabe durch den Interaction Manager.
- Triggernotifikationen von den Vermittlungsstellen (SSP) zu empfangen, zwischenzuspeichern und an den Interaction Manager weiterleiten. Beim Empfang von Triggernotifikationen verhält sich der Intelligent Proxy wie ein SCP.
- Weiterleiten der angepassten Triggernotifikationen an die vom Interaction Manager bestimmte Diensteplattform. Werden die Triggernotifikationen an IN-Dienste
- weitergeleitet, verhält sich der Intelligent Proxy wie ein SSP. Im Falle der Weiterleitung an OSA-Dienste erfolgt dies direkt über die OSA Call Control Funktionalität des Intelligent Proxy.
- Steuerbefehle von den Diensteplattformen empfangen, zwischenspeichern und an den Interaction Manager weiterleiten. Beim Empfang von Steuerbefehlen von IN-Diensten, verhält sich der Intelligent Proxy wie ein SSP. Steuerbefehle von OSA-Diensten werden von der OSA Call Control Funktionalität des Intelligent Proxy empfangen.
- Weiterleiten der vom Interaction Manager generierten Steuerbefehle an die Vermittlungsstellen. Dabei verhält sich der Intelligent Proxy wie ein SCP.

Der Interaction Manager hat die selben Aufgaben wie im Falle der eigenständigen Plattform. Der Unterschied besteht darin, dass die OSA Plattform bereits eine Triggerdatenbank enthält. Diese kann auch für die Triggerdaten des SIG (Triggerdatenbank des Interaction Manager) erweitert werden. Die Verwaltung der Trigger erfolgt in diesem Falle an einer zentralen Stelle, während dies im Falle der eigenständigen Plattform des SIG verteilt auf SIG und OSA Plattform passiert.

### Abkürzungsverzeichnis

- BCSM: Basic Call State Model
- CAP: Camel Application Part
- CC: Call Control
- DP: Detection Point
- EDP: Event Detection Point
- EDP-N: Event Detection Point Notification
- EDP-R: Event Detection Point Request
- GSM: Global System for Mobile Communication
- HLR: Home Location Register
- IMT-2000: International Mobile Telecommunications 2000
- IN: Intelligent Network
- IS-95: Interim Standard 95
- IVR: Interactive Voice Response
- NT: Number Translation
- O-BCSM: Originating Basic Call State Model
- OSA: Open Service Access
- PIC: Point in Call
- PP: Prepaid
- PSTN: Public Switched Telephone Network
- SCP: Service Control Point
- SCS: Service Capability Server
- SSP: Service Switching Point
- SIG: Service Interaction Gateway
- T-BCSM: Terminating Basic Call State Model
- TDP: Trigger Detection Point
- VPN: Virtual Private Network

## Patentansprüche

1. Verfahren zur Koordination bzw. Steuerung von Diensten, die in die Verbindungssteuerung vonTelekommunikationsverbindungen eingebunden sind, **dadurch gekennzeichnet, dass** Signalisierungsinformationen von Verbindungseinrichtungen an Dienste in einer konfigurierten Reihenfolge weitergeleitet werden, dass die Dienste ausgeführt werden, und dass Steuerbefehle aufgrund der Ergebnisse der Dienste an die Verbindungseinrichtung weitergeleitet werden.

2. Verfahren nach Anspruch 1, **dadurch gekennzeichnet, dass** es beim Auftreten eines Ereignisses, das zum Ausführen von wenigstens zwei Diensten führt, ausgeführt wird.

3. Verfahren nach Anspruch 1 oder 2, **dadurch gekennzeichnet, dass** die Dienste auf einer oder mehrerer der folgenden Plattformen ausgeführt werden: IN, OSA, SIP.

4. Verfahren nach einem der Ansprüche 1 bis 3, **dadurch gekennzeichnet, dass** ein Dienst entweder die Verbindungssteuerung beeinflusst oder Benachrichtigungen über Ereignisse in der Verbindungssteuerung erhält.

5. Verfahren nach einem der Ansprüche 1 bis 4, **dadurch gekennzeichnet, dass** die Dienste in einer eindeutig festgelegten Reihenfolge gereiht sind.

6. Verfahren nach einem der Ansprüche 1 bis 4, **dadurch gekennzeichnet, dass** die Dienste Prioritätsklassen zugeordnet sind, wobei die Prioritätsklassen in einer eindeutig festgelegten Reihenfolge gereiht sind.

7. Verfahren nach Anspruch 6, **dadurch gekennzeichnet, dass** die Reihenfolge der Dienste innerhalb einer Prioritätsklasse festgelegt ist.

8. Verfahren nach einem der Ansprüche 1 bis 4, **dadurch gekennzeichnet, dass** die Reihenfolge der Dienste anhand von Regelmechanismen bestimmt wird.

9. Verfahren nach einem der Ansprüche 1 bis 8, **dadurch gekennzeichnet, dass** wenigstens ein folgender Dienst erst aufgerufen wird, nachdem ein vorhergehender Dienst beendet wurde.

10. Verfahren nach einem der Ansprüche 1 bis 9, **dadurch gekennzeichnet, dass** ein folgender Dienst aufgrund des Ergebnisses eines vorhergehenden Diensts geänderte Signalisierungsinformationen erhält.

11. Verfahren nach einem der Ansprüche 1 bis 10, **dadurch gekennzeichnet, dass** alle Steuerbefehle der Dienste zuerst verarbeitet und dann an die Verbindungssteuerung weitergeleitet werden.

12. Verfahren nach einem der Ansprüche 1 bis 11, **dadurch gekennzeichnet, dass** die Dienste an einer einzigen Stelle im Ablauf der Verbindungssteuerung Einfluss nehmen.
